Europäisches Patentamt

European Patent Office

Office européen des brevets

(19)

(11) Veröffentlichungsnummer: **0 285 944**
**A2**

(12) **EUROPÄISCHE PATENTANMELDUNG**

(21) Anmeldenummer: 88104935.7

(22) Anmeldetag: 26.03.88

(51) Int. Cl.⁴: **G11B 23/04 , F16B 19/00**

(30) Priorität: 10.04.87 DE 8705330 U

(43) Veröffentlichungstag der Anmeldung:
12.10.88 Patentblatt 88/41

(84) Benannte Vertragsstaaten:
DE FR GB IT

(71) Anmelder: **Agfa-Gevaert AG**
**Patentabteilung**
**D-5090 Leverkusen 1(DE)**

(72) Erfinder: **Toral, José**
**Stiftsbogen 162**
**D-8000 München 70(DE)**
Erfinder: **Lutz, Gottfried**
**Hauptstrasse 44a**
**D-8031 Seefeld(DE)**

(54) **Magnetbandkassette.**

(57) Bei einer Magnetbandcassette ist deren oberes und unteres Cassettenteil durch nicht lösbare Befestigungsmittel miteinander verbunden, wobei in mindestens eines der für Schraubverbindungen gemäß dem Stand der Technik vorgesehenen Löcher ein Kunststoffbolzen eingebracht wird. Der Bolzen ist mit längs verlaufenden Rippen (8) oder mit einer inneren Bohrung (9) versehen oder er besitzt einen - schraubengangförmigen oder sägezahnförmigen Verlauf (11) in der Art eines Dübels.

FIG. 2

Xerox Copy Centre

## Magnetbandcassette

Die Neuerung betrifft Cassetten, die aufgespulte bandförmige magnetische Aufzeichnungsträger enthalten und deren obere und untere Cassettenteile nicht mehr lösbar miteinander verbunden sind.

Die bekannten Magnetbandcassetten bestehen im wesentlichen aus zwei Hälften, und zwar dem Ober-und dem Unterteil, wobei das Oberteil mittels Schrauben mit dem Unterteil fest verbindbar ist. Diese Cassetten haben den Nachteil, daß man sie mit Hilfe eines Schraubenziehers ohne weiteres öffnen kann und das darin enthaltene beispielte Magnetband entnehmen kann. Es besteht daher das Bedürfnis nach beispielten Magnetbandcassetten, die nicht ohne weiteres geöffnet werden können und bei denen nicht die Möglichkeit besteht, daß das Originalband herausgenommen wird und durch eine Kopie ausgetauscht wird, welche im allgemeinen eine schlechtere Qualität als das Original hat. Das Bedürfnis nach derartigen Magnetbandcassetten besteht insbesondere bei Unternehmen, die Videocassetten mit bespielten Bändern verleihen.

Zwar ist unter anderem aus der DE-OS 29 24 453 ein Verfahren zur Herstellung kopiersicher bespielter Videocassetten bekannt, doch kann dieses Verfahren natürlichen nicht bei zu öffnenden Cassetten die Vertauschung von Original und Raubkopie verhindern. Aus der FR 2 540 276 ist bekannt, die die Schraubverbindungen enthaltenden Löcher am Casset tenoberteil durch einen Stopfen zu verschließen, der mit dem Cassettenmaterial durch Ultraschall verschweißt wird. Diese Vorrichtung erfordert einen zusätzlichen Fabrikationsschritt und verteuert daher die Cassettenherstellung. Aus dem DE-GM 83 04 710 sind Videocassetten bekannt, deren Teile durch Abreißschrauben oder nicht lösbare Schrauben, die zwar eindrehbar aber nicht mehr ausdrehbar sind, gesichert werden. Die Anmelderin gibt aber selbst an, daß mit Spezialwerkzeugen die Verbindungen lösbar sind. Weiterhin werden in diesem Gebrauchsmuster Nieten oder Schnappverbindungen zur Verbindungen von Ober- und Unterteil vorgeschlagen, die aber einen anderen Cassettenaufbau und damit eine Verteuerung der Fertigung der Cassetten bedingen.

Deshalb bestand die Aufgabe, eine einfache und sichere Verbindung der Teile von Cassetten für magnetische Aufzeichnungsträger zu schaffen, die keine Änderung der Cassettenteile erforderlich macht und zudem einfach herzustellen ist.

Neuerungsgemäß wurde die Aufgabe gelöst mit einer Cassette mit den im kennzeichnenden Teil des Anspruchs 1 angegebenen Merkmalen. Weitere Merkmale gehen aus dem Unteranspruch, der Beschreibung sowie den Zeichnungen hervor.

Nachstehend wird die Erfindung anhand der Zeichnungen näher erläutert und zwar zeigt

Figur 1 eine Draufsicht auf eine neuerungsgemäße Cassette

Figur 2 einen Querschnitt durch ein Cassettengehäuse mit der neuerungsgemäßen Verbindung.

Figur 3 a - c verschiedene Ausführungsformen neuerungsgemäßer Stopfen in Draufsicht und im Querschnitt

Figur 4 ein Cassettenoberteil mit einer anderen neuerungsgemäßen Ausführung.

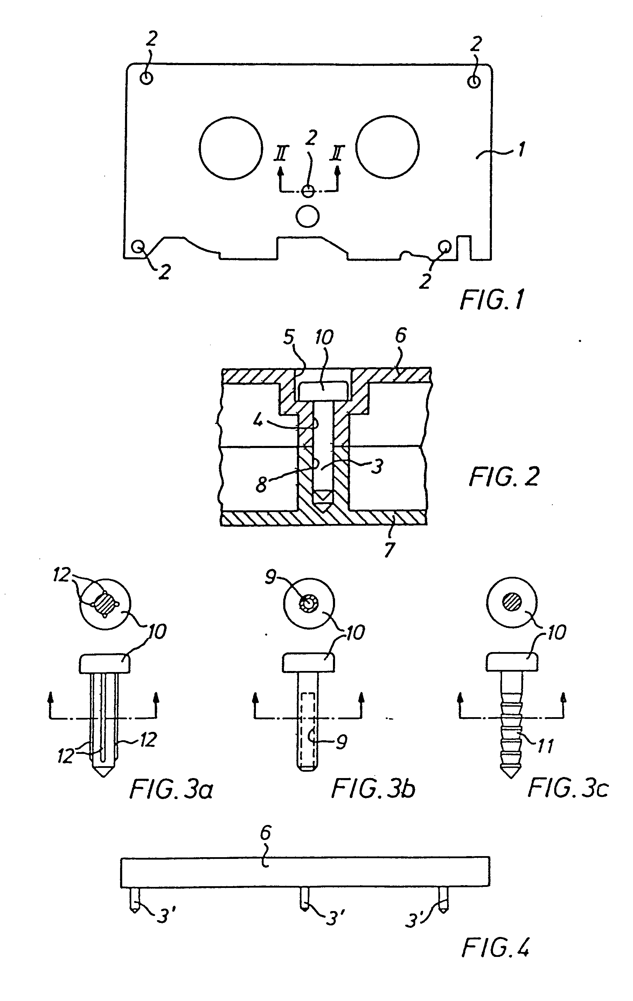

Figur 1 zeigt in Draufsicht eine Cassette (1) mit Schraublöchern (2), von denen neuerungsgemäß mindestens in einem Schraubenloch ein Bolzen (3) steckt, während die übrigen Schraubenlöcher übliche Schrauben enthalten können. Wie Figur 2 zeigt, wird der Bolzen (3) so in die Ausnehmung (4) im Cassettenoberteil (6) eingeschlagen oder eingepreßt, daß er in die im Cassettenunterteil (7) vorgesehene Ausnehmung (8) eindringt und auf diese Weise beide Cassettenteile miteinander verbindet. Da im Bolzenkopf (10), der gewölbt oder platt sein kann, keine Bohrung vorhanden ist, ist die Verbindung praktisch unlösbar. Die Ausnehmung (5) im Cassettenoberteil kann durch einen Stopfen abgedeckt werden, so daß die Bolzenverbindung nach außen nicht erkennbar ist. Der Bolzen kann aus dem gleichen Kunststoffmaterial wie die Cassettenteile bestehen.

Figur 3 stellt beispielhaft verschiedene Ausführungsformen neuerungsgemäßer Bolzen dar, um die unlösbare Verbindung von Cassettenunter- und -oberteil zu gewährleisten

(a) mit einer oder mehreren längsverlaufenden Rippen (12)

(b) einer inneren längs verlaufenden Bohrung (9)

(c) mit einem schraubengangförmigen oder sägezahnartigen Verlauf (11) in der Art eines Dübels

Eine andere mögiche Ausführung wäre ein sogenannter Kerbstift, der an der Außenseite längs verlaufende Kerben besitzt.

Da im Gegensatz zu den bisher bekannten Ausführungsformen praktisch keine Änderung der Teile erforderlich ist, die Verbindung unlösbar ist, der Bolzen preiswert herstellbar ist und dessen Einbringen noch einfacher als das sonst übliche Verschrauben der Cassettenteile gestaltet werden kann, wurde mit der neuerungsgemäßen Cassette eine einfache und gut funktionierende Lösung gefunden, um das Entfernen des Originalbandes aus der Magnetbandcassette ohne deren Zerstörung zu verhindern. Die beschriebene Lösung ist zudem auf alle bekannten Cassettentypen, wie beispielsweise Audio, Video oder DAT, anwendbar.

In Figur 4 wird noch eine weitere neuerungsgemäße Ausführungsform dargestellt. Dabei besitzt das Cassettenoberteil an seiner Unterseite einen oder mehrere angespritzte Stifte (3'), welche die in Figur 3 dargestellte Form haben können und die so angeordnet sind, daß sie in die im Cassettenunterteil vorgesehenen Schraublöcher eingepreßt werden können. Dabei können in der Oberseite des Cassettenoberteils (nicht gezeichnet) als Attrappen Schraublöcher sowie Schraubattrappen vorhanden sein.

## Ansprüche

1. Aus mehreren Teilen zusammensetzbare Cassette, die einen aufgespulten bandförmigen magnetischen Aufzeichnungsträger enthält, deren oberes und unteres Cassettenteil durch nicht lösbare Befestigungsmittel miteinander verbunden sind, dadurch gekennzeichnet, daß als Befestigungsmittel in mindestens eines der für Schraubverbindungen gemäß dem Stand der Technik vorgesehenen Löcher (2) ein Kunststoffbolzen (3) eingebracht wird.

2. Cassette nach Anspruch 1, dadurch gekennzeichnet, daß der Bolzen aus dem gleichen Material wie das Cassettenoberteil (6) bzw. Unterteil (7) besteht.

3. Cassette nach den Ansprüchen 1 bis 2, dadurch gekennzeichnet, daß der Bolzen mit längs verlaufenden Rippen (8) oder mit einer inneren Bohrung (9) versehen ist oder einen - schraubengangförmigen oder sägezahnförmigen Verlauf (11) in der Art eines Dübels besitzt.

4. Cassette nach den Ansprüchen 1 bis 3, dadurch gekennzeichnet, daß das Cassettenoberteil (6) an seiner Unterseite einen oder mehrere angespritzte Stifte (3') hat, die in die im Cassettenunterteil vorgesehenen Schraublöcher (8) einpreßbar sind.

FIG.1

FIG. 2

FIG.3a

FIG.3b

FIG.3c

FIG.4